# EUROPÄISCHE PATENTSCHRIFT

(11) **EP 1 481 995 B1**
(45) Veröffentlichungstag und Bekanntmachung des Hinweises auf die Patenterteilung: **20.09.2006**
(21) Anmeldenummer: 04009362.7
(22) Anmeldetag: 21.04.2004
(51) Int. Cl.: C08F 220/00, C09D 133/00, C09J 133/00, C14C 11/00

(54) **Wässrige Copolymerisatdispersionen, Verfahren zu ihrer Herstellung und Zusammensetzungen enthaltend dieselben für Beschichtungen**
Aqueous copolymer dispersions, method for their production and coating compositions containing them
Dispersions aqueuses de copolymère, procédé pour leur préparation et composition pour revêtements les contenant

(30) Priorität: 28.05.2003 DE 10324230
(43) Veröffentlichungstag der Anmeldung: 01.12.2004
(73) Patentinhaber: Celanese Emulsions GmbH, 61476 Kronberg/Ts. (DE)
(72) Erfinder: Meiners, Christian, Dr., 82131 Gauting (DE)
(74) Vertreter: Ackermann, Joachim

(56) Entgegenhaltungen:
- EP-A- 0 640 629
- DATABASE CHEMABS [Online] CHEMICAL ABSTRACTS SERVICE, COLUMBUS, OHIO, US; SASAKI, HISASHI: "Silane coupling agents for water-based coatings" XP002292939 gefunden im STN Database accession no. 2000:660564 & KOGYO TOSO , 165, 40-43 CODEN: KTOSDW; ISSN: 0286-6943, 2000,

## Beschreibung

Die vorliegende Erfindung betrifft wässrige Copolymerisatdispersionen, Verfahren zu ihrer Herstellung sowie ihre Verwendung in Beschichtungsmitteln.

Zur Herstellung von Beschichtungen werden häufig Copolymerisate eingesetzt, die durch den Einsatz von funktionellen Monomeren vernetzt werden. Sollen elastische Beschichtungen oder Filme hergestellt werden so werden deren elastischen Eigenschaften durch ihre Dehnungs- und Elastizitätsmoduli charakterisiert. Die Dehnungs-Elastizitätsmoduli der Polymerisate können hierbei durch Variation der Vernetzermenge über einen weiten Bereich eingestellt werden.

Es ist bekannt, Copolymerisate durch Emulsionspolymerisation herzustellen. Als Vernetzer setzt man dabei entweder bi- oder oligo-olefinisch ungesättigte Monomere, wie zum Beispiel Hexandioldimethacrylat, oder funktionelle Monomere oder Metallkomplexe ein, die im allgemeinen erst bei der Filmbildung zur Vernetzung führen. Geeignete Metallkomplexe lassen sich von Übergangsmetallen der Gruppe 4A des Periodensystems, wie Zirkonium, ableiten (P.J. Moles, Polym. Paint Colour J. 1988, 178, Seite 154).

Vernetzer, die mehrere ethylenisch-ungesättigte Gruppen aufweisen, führen zu einer mehr oder minder homogenen Vernetzung innerhalb der Dispersionspartikel, während benachbarte Partikel nur durch Verschlaufung von Polymerkettenenden physikalisch vernetzt werden.

Darüber hinaus sind auch Reaktivvernetzungssysteme bekannt, bei denen es neben einer Vernetzung der Polymerketten in den Polymerpartikeln auch zu einer interpartikulären Vernetzungsreaktion benachbarter Polymerpartikel bei der Filmbildung kommt. Typische Reaktivvernetzermonomere, die als funktionelle Einheiten im Copolymerisat eingebaut werden, sind N-Methylolacrylamid (NMAA) oder olefinisch ungesättigte Silane und Epoxide, wie Vinyltrimethoxysilan oder Glycidylmethacrylat.
Wässrige Copolymerisatdispersionen, in denen monoethylenisch ungesättigte, vernetzende Silane einpolymerisiert werden, sind aus DE 198 58 851 A1 bekannt. Als bevorzugte Silane werden Vinyltrimethoxysilan oder Silane enthaltend Epoxid-Gruppen, wie die Glycidyl-Gruppe, verwendet. Beschichtungen und Filme auf Basis derartiger Copolymerisatdispersionen weisen eine erhöhte Elastizität auf.
Aus Database Chemabs., XP002292939 sind Silankoppler für wässrige Beschichtungsmittel bekannt.
EP 0 640 929 A1 (=DE 43 29 089 A) beschreibt ein Verfahren zur Herstellung von wässrigen silanolgruppenmodifizierten Kunststoffdispersionen durch polymeranaloge Umsetzung mit Epoxisilanen.
Aus DE 43 29 089 A1 ist bekannt, während der Polymerisationsreaktion Epoxisilane, beispielsweise Glycidyloxypropyltrimethoxysilan zuzusetzen. Derartige Dispersionen werden vor allem im Bautenschutzbereich eingesetzt und zeichnen sich durch eine sehr gute Nasshaftzugfestigkeit bei der Verwendung in Fliesenklebern sowie durch ein sehr gutes Pigmentbindevermögen in Farben aus.

Auch die nachträgliche Zugabe von Epoxisilanen zur Modifizierung des bereits gebildeten Copolymerisats ist bekannt. So behandelt EP 0 214 696 A1 die nachträgliche Zugabe von 3-Glycidoxypropyltrimethoxysilan zu einem Styrol/Butylacrylat/Acrylsäure-Copolymerisat. Die nachträgliche Modifizierung mit Epoxysilanen erhöht die Nasszugspannung solcher auf einem hohen Styrolanteil basierenden Klebern auf keramischem Material.
US-A-4,077,932 und US-A-4,032,487 befassen sich mit wässrigen Klebstoffzusammensetzungen, die auf Copolymerisaten basieren, in denen Stickstoff haltige Monomere, wie zum Beispiel Dimethylaminomethylmethacrylat, einpolymerisiert werden. Die Modifizierung durch nachträgliche Zugabe von Epoxisilanen, wie zum Beispiel von Glycidoxypropyltrimethoxysilan, erhöht die Widerstandsfähigkeit gegenüber Feuchtigkeit und erhöht die Zugspannung der Filme. Durch die Anwesenheit von reaktiven Aminogruppen in dem Copolymerisat kommt es jedoch zu einer vorzeitigen Reaktion zwischen dem Polymer und dem Epoxisilan während der Lagerung der Klebstoffzusammensetzung.

Lagerstabile Dispersionen lassen sich nach US-A-6,127,462 dadurch erhalten, indem man carboxylgruppenhaltige Polymerisate mit Epoxisilanen, beispielsweise 2-(3,4-Epoxycyclohexyl)ethyltriethoxysilan, modifiziert und vor der Anwendung als Beschichtungsmittel durch Katalysatorzugabe die Vernetzungsreaktion mit dem Epoxisilanvernetzer einleitet. Als Katalysatoren werden tertiäre Amine oder zinnorganische Verbindungen empfohlen. Die bekannten Zusammensetzungen weisen selbst nach der Lagerung noch eine hohe Klebefähigkeit aus. Die bekannten Zusammensetzungen erfordern jedoch die Anwesenheit von Katalysatoren, beispielsweise von tertiären Aminen, die in Gegenwart von Sauerstoff bei längerer Lagerung zu unerwünschten und gefärbten Zersetzungsprodukten führen können. Wird das katalytische Material schon bei der Herstellung der Zubereitung zugesetzt, so verringert sich ihre Lagerstabilität.

Es wurde nun überraschenderweise gefunden, dass sich in Beschichtungen, insbesondere in elastischen Beschichtungen die Reißdehnung, die Zugspannung beim Bruch und die Filmkohäsionsenergie gleichzeitig erhöhen lassen, wenn man wässrigen Copolymerisatdispersionen geringe Mengen an Cycloalkylepoxisilanen zusetzt.

Bei der Verwendung von Vernetzersystemen in Copolymerisatdispersionen beobachtet man im allgemeinen eine gegenläufige Kopplung von Reißdehnung und Zugspannung, das heißt, dass mit zunehmender Reißdehnung die Zugspannung sich verkleinert. Es gibt nur wenige Beispiele für Vernetzersysteme, bei denen die übliche antagonistische Kopplung von Reißdehnung und Zugspannung aufgehoben ist, also bei erhöhter Vernetzerkonzentration im Copolymerisat eine erhöhte Zugspannung bei gleichbleibender oder erhöhter Reißdehnung zu beobachten ist.

Aus Surface Coatings Australia 1995, 32 (5), Seite 18 ist die Vernetzung von Dispersionspolymerisaten durch mehrwertige Metallionen bekannt. Die Zugspannung der Filme nimmt bei in etwa gleichbleibender Reißdehnung der Polymerisate durch die Vernetzung synergetisch zu.

Proc. Int. Conf. Org. Coat.: Waterborne, High Solids, Powder Coat., 24^{th} (1998), 503-521 beschreibt heterogene Polymerisate, die durch Schwellen eines weichen Emulsionspolymerisats mit einer zweiten Monomerdosierung und anschließende Fortsetzung der Polymerisation erzeugt werden. Die zweite Monomerdosierung führt zur Ausbildung kleiner, harter Domänen umgeben von weicher Matrix in den Polymerisatteilchen, die nach der Filmbildung durch Transmissionselektronenmikroskopie visualisiert werden können. Die entsprechenden Polymerfilme weisen gesteigerte Reißdehnungs- und Zugspannungswerte auf.

Die vorliegende Erfindung betrifft wässrige Copolymerisatdispersion erhältlich durch radikalische Polymerisation zumindest der Monomeren a) und b) und durch nachträgliche Zugabe von mindestens einem Cycloalkylepoxysilan zu der erhaltenen Copolymerisatemulsion, wobei Monomer a) ein Ester aus 3 bis 6 C-Atome enthaltenden α,β-monoethylenisch ungesättigten Carbonsäuren sowie 1 bis 18 C-Atome enthaltenden Alkanolen und gegebenenfalls eine vinylaromatische Verbindung ist oder ein Gemisch dieser Monomeren bedeutet und wobei Monomer b) eine ein- oder mehrbasische α,β-monoethylenisch ungesättigte Säure und/oder deren Anhydrid bedeutet.

Bevorzugt werden wässrige Copolymerisatdispersion, die zusätzlich zu den Monomeren a) und b) sich noch mindestens von einem der Monomeren c), d), e) und/oder f) ableiten, wobei Monomer c) ein di-oder oligoethylenisch ungesättigtes vernetzendes Monomer oder ein Gemisch dieser Monomeren bedeutet, Monomer d) ein 3 bis 8 C-Atome enthaltendes α,β-monoethylenisch ungesättigtes Carbonsäureamid oder ein Gemisch dieser Monomeren bedeutet, Monomer e) ein Reaktivvernetzermonomer, ausgewählt aus einer Kombination mindestens eines ethylenisch ungesättigten Silans mit mindestens einem ethylenisch ungesättigten Monomeren mit einer Oxirangruppe oder einem Gemisch dieser Monomeren bedeutet und Monomer f) ein sonstiges copolymerisierbares ethylenisch ungesättigtes Monomer oder ein Gemisch dieser Monomeren, ausgenommen ein stickstoffhaltiges, mit Epoxygruppen reagierendes Monomer, bedeutet.

In einer weiteren bevorzugten Ausführungsform betrifft die Erfindung die oben definierten wässrigen Copolymerisatdispersion mit einem Feststoffanteil von 20 - 65 Gew. %, wobei das Copolymerisat sich ableitet von 40 bis 99,8 Gew. % an Monomer a) oder deren Gemischen, von 0,1 bis 10 Gew. % an Monomer b) oder deren Gemischen, von 0 bis 10 Gew. % an Monomer c) oder deren Gemischen, von 0 bis 5 Gew. % an Monomer d) oder deren Gemischen, von 0 bis 5 Gew. % an Monomer e) oder deren Gemischen, und von 0 bis 30 Gew. % an Monomer f) oder deren Gemischen, wobei die Mengenangaben an Monomer auf die Gesamtmenge an eingesetztem Monomer bezogen sind.

Eine weitere bevorzugte Ausführungsform der vorliegenden Erfindung betrifft die oben definierten wässrigen Copolymerisatdispersionen, wobei die Gewichtsanteile der Monomeren a) und b) so gewählt werden, dass ein nur aus diesen Monomeren aufgebautes Copolymerisat eine Glasübergangstemperatur im Bereich zwischen -50 bis 120°C, vorzugsweise zwischen -50 und 15 °C aufweisen würde.

Bei dem erfindungsgemäß eingesetzten Cycloalkylepoxisilan handelt es sich bevorzugt um eine Verbindung der allgemeinen Formel (I) 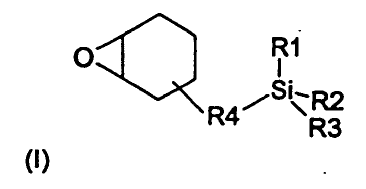 wobei R¹, R² und R³ lineare oder verzweigte Alkoxyreste mit Bindung des Sauerstoffatoms zum Siliciumatom und/oder Alkylreste mit 1-10 CAtomen bedeuten und R⁴ ein linearer oder verzweigter Alkylenrest mit 1-10 C-Atomen darstellt.

Die erfindungsgemäßen wässrigen Copolymerisatdispersionen enthalten vorzugsweise ein oder mehrere UV-Initiatoren B) und/oder ein oder mehrere Emulgatoren C), und/oder ein oder mehrere wasserlösliche Copolymerisate D).

In einer weiteren bevorzugten Ausführungsform betrifft die Erfindung wässrige Copolymerisatdispersionen mit einem Feststoffanteil von 20 - 65 Gew.-%, dadurch erhältlich, dass
ein Copolymerisat A) im wesentlichen bestehend aus
a) 40 bis 99,8 Gew. %, vorzugsweise 65 bis 85 Gew. % mindestens eines Esters aus 3 bis 6 C-Atome enthaltenden a, β-monoethylenisch ungesättigten Carbonsäuren sowie 1 bis 18 C-Atome enthaltenden Alkanolen und 0 bis 30 Gew. % mindestens einer vinylaromatischen Verbindung (Monomere a),
b) 0,1 bis 10 Gew. % mindestens einer ein- oder mehrbasischen (a, βmonoethylenisch ungesättigten Säure oder deren Anhydriden (Monomere b),
c) 0 bis 10 Gew. %, bevorzugt 0 - 0,5 Gew. % mindestens eines di- oder oligoethylenisch ungesättigten vernetzenden Monomeren (Monomere c),
d) 0 bis 5 Gew.-% wenigstens eines 3 bis 8 C-Atome enthaltenden (a, β-monoethylenisch ungesättigten Carbonsäureamids, welches am Stickstoff einfach oder doppelt mit bis zu 5 C-Atomen enthaltenden Alkylengruppen, Alkylsulfaten, Alkylsulfonaten, Alkylphosphaten, Alkylethern oder Alkylethersulfaten oder -phosphaten substituiert sein kann (Monomere d),
e) 0 bis 5 Gew. %, bevorzugt 0 bis 2 Gew.-% Reaktivvernetzermonomere, ausgewählt aus einer Kombination mindestens eines ethylenisch ungesättigten Silans mit mindestens einem ethylenisch ungesättigten Monomeren mit einer Oxirangruppe (Monomere e),
f) 0 bis 30 Gew.-% mindestens eines sonstigen copolymerisierbaren ethylenisch ungesättigten Monomeren (Monomere f), ausgenommen stickstoffhaltige, mit Epoxygruppen reagierende Monomere,
wobei sich die Gewichtsanteile auf das Gesamtgewicht an Monomeren beziehen und die Gewichtsanteile der Monomeren a) und b) innerhalb der beschriebenen Grenzen so gewählt werden, dass ein nur aus diesen Monomeren aufgebautes Copolymerisat eine Glasübergangstemperatur im Bereich zwischen -50 und 15 °C aufweisen würde;
durch Polymerisation der Monomeren a) bis f) in Wasser hergestellt wird und zu der so erhaltenen wässrigen Copolymerisatdispersion nachträglich ein oder mehrere funktionelle Cyclohexylepoxysilane der allgemeinen Formel (I) 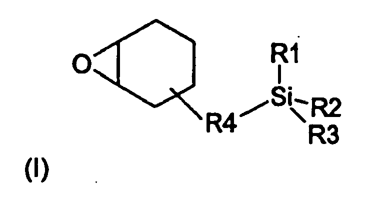 wobei R¹, R² und R³ lineare oder verzweigte Alkoxyreste mit Bindung des Sauerstoffatoms zum Siliciumatom und/oder Alkylreste mit 1-10 C-Atomen bedeuten und R⁴ ein linearer oder verzweigter Alkylenrest mit 1-10 C-Atomen darstellt, bei Temperaturen zwischen 25 und 90°C zugegeben werden;
und gegebenenfalls ein oder mehrere UV-Initiatoren B) in einer Menge von 0 bis 5 Gew. %, bevorzugt 0,05 bis 0,5 Gew. %, bezogen auf das Copolymerisat A);
gegebenenfalls ein oder mehrere Emulgatoren C) in einer Menge von 0 bis 10 Gew. %, bezogen auf das Copolymerisat A); und
gegebenenfalls ein oder mehrere wasserlösliche Copolymerisate D) in einer Menge von 0 bis 4 Gew. %, bezogen auf das Copolymerisat A), nachträglich zu der wässrigen Copolymerisatdispersion zugegeben werden.

Es wurde überraschenderweise gefunden, dass bereits bei sehr geringen Zusatzmengen von Cycloalkylepoxysilanen, vorzugsweise Cyclohexylepoxysilanen der allgemeinen Formel (I), zu wässrigen Copolymerisatdispersionen eine stark erhöhte Bruchenergie in Beschichtungen beobachtet wird. Dieses trifft insbesondere zu für elastische Beschichtungen mit tiefer Glastemperatur des Copolymers A) von-50 bis +15°C. Die Menge an zugesetztem Cycloalkylepoxysilan ist nur sehr klein und beträgt typischerweise bis zu 1 Gew. %, bezogen auf die wässrige Dispersion des Copolymerisats A).

Vorzugsweise werden Mengen an Cycloalkylepoxysilanen von bis zu 0,5 Gew. %, insbesondere von bis zu 0,25 Gew. %, bezogen auf die wässrige Dispersion des Copolymerisats A), zugesetzt.

Die Mindestmenge an den Cycloalkylepoxysilanen beträgt 0,05 Gew.-%, bezogen auf die wässrige Dispersion des Copolymerisats A).

Vorzugsweise bedeuten in der allgemeinen Formel (I) R¹, R² und R³ jeweils unabhängig voneinander -OCH₃ oder -OC₂H₅ und R⁴ -C₂H₄-.

Als Ester von 3 bis 6 C-Atome enthaltenden α,β-monoethylenisch ungesättigten Carbonsäuren und 1 bis 18 C-Atome enthaltenden Alkanolen werden Ester der Acryl- und/oder Methacrylsäure vorzugsweise eingesetzt.

Weitere bevorzugte Ausführungsformen werden in den Ansprüche 12-18 sowie in den Ansprüchen 19-20, 21-25 und 26 beansprucht.

Es wurden bei diesen geringen Zusatzmengen überraschenderweise Steigerungen der Bruchenergien um bis zu 84% bezogen auf den Ausgangswert ermittelt. Die Beschichtungen weisen hierbei keine reduzierten Reißdehnungswerte auf.

Die synergetische Erhöhung der Zugspannung und Reißdehnung bedeutet eine Verbesserung der anwendungstechnischen Eigenschaften der mit den erfindungsgemäßen Copolymerisatdispersionen hergestellten Beschichtungen. Die hieraus resultierende Erhöhung des zum Filmriss notwendigen Energieeintrags bewirkt eine erhöhte Rissüberbrückung bei gegebener einwirkender Energie, wie sie beispielsweise bei einer Rissaufweitung einer gestrichenen Hausfassade auftritt. Eine wesentliche Absenkung der Reißdehnung zu Gunsten erhöhter Zugspannung wirkt sich hier nachteilig aus, da die Reißdehnung im allgemeinen direkt proportional zum Rissüberbrückungsvermögen ist. Die Kohäsionsenergie von Polymerfilmen ist proportional zur Fläche unter der Zugspannungs-/Reißdehnungskurve und kann in Reißdehnungsversuchen experimentell ermittelt werden.

Die Cycloalkylepoxysilane werden der wässrigen Copolymerisatdispersion A) zugesetzt. Ihre Zugabe erfolgt also nach der eigentlichen Copolymerisation der Monomere a) und b), gegebenenfalls mit den Monomeren c) bis f), zu dem Copolymerisat A). Da nur kleine Mengen an Cycloalkylepoxysilanen als Nachgaben ausreichen, lassen sich die erfindungsgemäßen wässrigen Copolymerisatdispersionen sehr kostengünstig herstellen.

In einer bevorzugten Ausführungsform werden in der erfindungsgemäßen wässrigen Copolymerisatdispersion solche Copolymerisate eingesetzt, die eine niedrige Glasübergangstemperatur in einem Bereich von -50 bis +15°C aufweisen, wodurch auf den Einsatz von Härtungskatalysatoren für die Cycloalkylepoxysilane verzichtet werden kann.

Gegebenenfalls können auch noch UV-Initiatoren B), Emulgatoren C) und wasserlösliche Copolymerisate D) als Nachgabe zu der wässrigen Copolymerisatdispersion hinzugefügt werden.

Die Bestimmung der Glasübergangstemperaturen der Copolymerisate erfolgt mittels DSC (Differential Scanning Calorimetry, 20°C/min, midpoint), die Monomerzusammensetzungen der durch die Glasübergangstemperatur charakterisierten Copolymerisate wird durch die Fox-Gleichung (T.G. Fox, Bull. Am. Phys. Soc. (Ser. II) 1956, 1, 123) unter Berücksichtigung der mittels DSC bestimmten Glasübergangstemperaturen der einzelnen Monomer-Homopolymerisate (wie zum Beispiel aus Emulsion Polymerization and Emulsion Polymers, John Wiley, Chichester 1997, Seite 624 bekannt) ermittelt.

Ebenfalls zeigen auch Copolymerisate, die ein Reaktivvernetzersystem aus mindestens einem ethylenisch ungesättigten Silan, beispielsweise Vinyltriethoxysilan, und mindestens einem ethylenisch ungesättigten Oxiranderivat, beispielsweise Glycidylmethacrylat, enthalten (Monomere e), die erfindungsgemäße synergetische Korrelation zwischen Zugspannung und Reißdehnung in Beschichtungen, nachdem sie mit den Cycloalkylepoxysilanen konfektioniert wurden.

Das Copolymerisat A) ist aus den Monomeren a) und b) aufgebaut und gegebenenfalls können die Monomere c) bis f) jeweils einpolymerisiert werden.

Bei den Monomeren a) handelt es sich bevorzugt um Ester der (Meth)acrylsäure. Im folgenden bezeichnet (Meth)acrylsäure sowohl Acrylals auch Methacrylsäure und (Meth)acrylat Ester der Acryl- und Methacrylsäure.

Bevorzugte vinylaromatische Verbindungen sind Styrol, Methylstyrol, Ethylstyrol, Dimethylstyrol, Diethylstyrol und Trimethylstyrol. Besonders bevorzugt ist hierbei Styrol.

Als Monomere b) werden bevorzugt (Meth)acrylsäure, Itaconsäure, Fumar und Maleinsäure sowie deren Anhydride eingesetzt.

Auch die Halbamide und Halbester von ethylenisch ungesättigten Dicarbonsäuren eignen sich als Monomere b).

Als vernetzende Monomere c) eignen sich besonders di- oder oligofunktionelle (Meth)acrylester, wie 1,6-Hexandioldi(meth)acrylat, 1,3- und 1,4-Butandioldi(meth)acrylat, Trimethylolpropantri(meth)acrylat. Bevorzugt werden Mengen zwischen 0 - 0,5 Gew. % an diesen Monomeren, bezogen auf das Gesamtgewicht der Monomeren.

Geeignete Monomere d) sind besonders (Meth)acrylamid sowie 2-Acrylamido-2-methylpropansulfonsäure und ihre Salze.

Als Monomere e) kommen ethylenisch ungesättigte Silane mit mindestens einem ethylenisch ungesättigten Rest in Kombination mit mindestens einem oxirangruppenhaltigen ethylenisch ungesättigten Monomer in Betracht. Eine solche Kombination bezeichnet man auch als Reaktiwernetzungssystem.

Besonders bevorzugt ist hierbei der Gebrauch von copolymerisierbaren Silanen der allgemeinen Formel CH₂=CH-Si(OX)₃, wobei X für Wasserstoff, eine Acylgruppe und/oder eine Alkylgruppe mit maximal 10 C-Atomen steht. Beispiele für solche Silane sind Vinyltrimethoxysilan und Vinyltriethoxysilan.

Weitere bevorzugte Silane sind solche der allgemeinen Formel CH₂=CZ-COO-Y-Si(OX)₃, wobei Z für Wasserstoff, eine Methyl- oder Ethylgruppe, Y für eine lineare oder verzweigte Alkylenkette mit 2 bis 6 C-Atomen und X für Wasserstoff, eine Acylgruppe und/oder eine Alkylgruppe mit maximal 10 C-Atomen steht. Ein Beispiel für diese Monomergruppe ist y-Methacryloylxypropyltriethoxysilan. Als ethylenisch ungesättigter Oxiranabkömmling kommt bevorzugt Glycidylmethacrylat und Glycidylacrylat in Betracht.

Als sonstige Monomere f) verwendet man zum Beispiel copolymerisierbare Emulgatoren und Costabilisatoren wie Poly(alkoxylat)(meth)acrylatphosphate oder Poly(alkoxylat)(meth)acrylatalkohole oder- ether wie Plex® 6850-0, 2-(2-Methylpropenoato)ethylsulfonat oder -sulfat, Vinylsulfonat sowie funktionelle Monomere wie (Meth)acrylate mit fluoriertem Alkylrest.

Als Komponenten B) kommen Benzophenon, Acetophenon und besonders Benzophenonderivate wie 1-Hydroxycyclohexylphenylketon und weiterhin 4-Methylbenzophenon sowie 2,4,6-Trimethylbenzophenon in Betracht. Vorteilhafterweise werden auch Phosphinoxidderivate, wie 2,4,6-Trimethylbenzoyldiphenylphosphinoxid alleine oder in Abmischungen mit anderen UV-Initiatoren eingesetzt. Geeignete Photoinitiatoren können auch zusammen mit Lichtstabilisatoren eingesetzt werden. Die Komponente B) wird durch Einrühren in die wenigstens ein Copolymerisat A) enthaltende wässrige Copolymerisatdispersion eingearbeitet. In der Komponente B) können Hilfsstoffe zugegeben sein, die den Photoinitiator in flüssigem Aggregatzustand halten, wie zum Beispiel Lösungsmittel oder Kristallisationsinhibitoren. Anwendungstechnisch ist es besonders vorteilhaft, wenn die Komponente B) flüssig vorliegt, da sie so leichter in die Copolymerisatdispersion einzuarbeiten ist. Die Komponente B) kann in die erfindungsgemäße Copolymerisatdispersion eingetragen werden oder alternativ dazu auch direkt in die aus der erfindungsgemäßen Copolymerisatdispersion hergestellten Beschichtung.

Als Emulgatoren C) können solche Emulgatoren nachträglich zugesetzt werden, die auch in der Emulsionspolymerisation Verwendung finden. Als nicht ionische Emulgatoren werden beispielsweise Fettalkoholpolyalkoxylatether wie Ethoxylierungsprodukte von Lauryl-, Oleyl- oder Stearyl- sowie Kokosfettalkohol, ethoxyliertes Polypropylenoxid, poly- oder oligoethoxylierte Alkylphenole eingesetzt.

Als ionische Emulgatoren können beispielsweise Alkyl-, Aryl- sowie Alkylarylsulfonate, -sulfate, -phosphonate, -phosphate oder Substanzen mit anderen anionischen oder kationischen Endgruppen verwendet werden. Zwischen der ionischen polaren Kopfgruppe und der unpolaren Einheit des Emulgators können auch Oligo- oder Polyalkylenoxideinheiten eingefügt sein.

Typische ionische Emulgatoren, die in erfindungsgemäßen Dispersionen Verwendung finden können, sind beispielsweise Natriumlaurylsulfat, Natriumlauryldi- und -triglycolethersulfat, Natriumundecylheptaglykolethersulfat, Tri(sec-butyl)phenylheptaglycolethersulfat, Natriumdodecylbenzolsulfonat sowie bevorzugt die Alkalimetall- oder Ammoniumsalze von Fettalkoholpolyglykolethersulfosuccinaten wie Aerosol® A 102 der Firma Cytec oder Disponil ® SUS 87 Spezial IS der Firma Cognis.

Als wasserlösliche Copolymerisate D) werden bevorzugt Styrol-Maleinsäureanhydrid-Copolymerisate mit einem Molekulargewicht von 1000 bis 4000 g/mol, die ganz oder teilweise mit Ammoniumhydroxid oder Alkalimetalhydroxiden neutralisiert vorliegen, nachträglich zugesetzt. Gegebenenfalls können auch modifizierte Styrol-Maleinsäureanhydrid Copolymerisate (SMA® -Harze) sowie deren Partialester eingesetzt werden. Die SMA® -Harze sollen jedoch keine mit den Cyclohexylepoxysilanen reaktiven Aminogruppen enthalten. Die Modifizierung des SMA® -Harzes kann hierbei auch in situ erfolgen.

Die Copolymerisate A) sind nach den dem Fachmann bekannten Methoden der radikalischen Substanz-, Lösungs-, Suspensions- und Emulsionspolymerisation zugänglich, wobei die Emulsionspolymerisation das bevorzugte Herstellverfahren ist.

Das Copolymerisat A) wird demgemäß vorzugsweise durch Emulsionspolymerisation der Monomeren a) und b) sowie gegebenenfalls c) bis f) in wäßrigem Medium in Gegenwart von radikalbildenden Initiatoren und Emulgatoren und gegebenenfalls Schutzkolloiden, Molekulargewichtsreglern und/oder weiteren Hilfsmitteln hergestellt.

Als Schutzkolloide in der Emulsionspolymerisation sind besonders Carboxymethylcellulosen mit einem niedrigen Molekulargewicht, wie die kommerziell verfügbaren Produkte Blanose© 7M, Blanose® 7UL und Blanose® TEL der Firma Clariant GmbH sowie Ambergum® 3021 der Firma Hercules, geeignet.

Gegebenenfalls ist die Carboxymethylcellulose noch mit zusätzlichen Resten modifiziert wie mit Hydroxyalkyl- oder Alkylgruppen. Bei Bedarf können auch alkyloxyalkylmodifizierte Carboxymethylcellulosen eingesetzt werden.

Bevorzugt erfolgt die Polymerisation unter Dosierung einer Monomerenemulsion, jedoch kann sie auch nach dem Batch-, Monomerenzulauf- oder sog. Power-feed-Verfahren hergestellt werden. Bei letzterem werden die Monomere als solche oder in Monomeremulsion mit einem Gradienten in der Monomerenzusammensetzung eindosiert.

Gegebenenfalls können mehrere verschiedene Monomeremulsionen eindosiert werden und damit auch morphologisch heterogene Copolymerisate erzeugt werden.

Das oder die Schutzkolloide kann/können ganz oder zum Teil im Reaktor vorgelegt werden oder aber mit der Monomerenemulsion bzw. mit den Monomeren zudosiert werden.

Zur Initiierung der Emulsionspolymerisation werden wasser- und/oder öllösliche Initiatoren eingesetzt. Die Emulsionspolymerisation kann hierbei durch thermische Zersetzung des Initiators oder durch Redoxpolymerisation eingeleitet und aufrechterhalten werden. In letzterem Falle kann die Reaktion sogar bei Temperaturen unterhalb oder bei Raumtemperatur durchgeführt werden.

Üblicherweise wird die Emulsionspolymerisation bei Reaktortemperaturen zwischen 50 und 85°C durchgeführt.

Geeignete Initiatoren sind z.B. Wasserstoffperoxid, Kalium-, Natrium- oder Ammoniumperoxodisulfat, t-Butylhydroperoxid, Laurylhydroperoxid, Dibenzoylperoxid sowie andere Organoperoxide. Alternativ kann die Polymerisation auch in Gegenwart von zusätzlich einer oder mehreren reduzierenden Substanzen wie Natriummetabisulfit, Rongalit® , Ascorbinsäure, Glucose durchgeführt werden (Redoxpolymerisation). Bei der Redoxpolymerisation werden bevorzugt katalytisch wirkende Metallsalze wie Eisen(III)chlorid zugesetzt, um die Radikalbildung zu beschleunigen.

Zur Steuerung des Molekulargewichts können während der Emulsionspolymerisation Regler eingesetzt werden, wie Mercaptane, insbesondere n-Dodecylmercaptan, Thiophenol oder Alkohole. Übliche Zusatzmengen des Reglers bewegen sich zwischen 0,05 und 0,3 Gew. %, bezogen auf das Gesamtgewicht des Copolymerisats.

Üblicherweise werden die erfindungsgemäßen Dispersionen auf einen pH-Wert von 3 bis 10 mit einer oder mehreren Basen eingestellt. Die pH-Werteinstellung kann auch durch Neutralisation der Monomeremulsion und/oder Vorlage mit Basen vor der Polymerisation erfolgen. Vorzugsweise wird der pH-Wert der Vorlage und/oder Monomeremulsion auf einen Wert >= 2,5 eingestellt. Besonders bevorzugt liegt der pH -Wert der Vorlage bei einem Wert >= 2,5 und der pH-Wert der Monomeremulsion bei einem pH-Wert >= 4. Besonders bevorzugt wird der pH-Bereich der Vorlage auf pH >= 2,5 und <= 7 und derjenige der Monomeremulsion auf >= 4 und <= 7 eingestellt.

Alternativ dazu kann der pH-Wert des Monomerzulaufs im Falle der Anwendung des Monomerzulaufverfahrens durch Dosierung der in wäßriger Lösung oder Suspension vorliegenden und (teil)neutralisierten (Meth)acrylsäure eingestellt werden.

Durch diese Maßnahmen werden die Koagulatbildung während der Emulsionspolymerisation zurückgedrängt, andererseits sind in der Emulsionspolymerdispersion anwesende Oxiran- und Alkoxysilangruppen bei einem pH-Bereich zwischen 4 und 7 gegenüber Hydrolyse stabiler als im sauren oder alkalischen Milieu. Bevorzugt werden als Basen zur pH-Werteinstellung Ammoniak-, Alkalimetall- und/oder Erdalkalihydroxid- sowie Natriumcarbonatlösungen eingesetzt. Alternativ dazu können auch andere Pufferlösungen oder Basen eingesetzt werden. Weiterhin können den erfindungsgemäßen Copolymerisatdispersionen noch Koaleszenzmittel, wie Testbenzin, Texanol, Butyldiglykol, Weichmacher, wie Dimethylphthalat und Dibutylphthalat, Verdicker basierend auf Polyacrylaten und/oder Polyurethanen zugesetzt werden. Beispiele für geeignete Verdicker sind Borchigel® L 75 N der Firma Borchers, Tafigel® PUR 40 der Firma Münzing-Chemie, DSX® 1550 der Firma Cognis.

Konservierungsmittel, Entschäumer, Netzmittel, UV-Stabilisatoren, Korrosionsschutzinhibitoren und -pigmente, anorganische Silicakolloiddispersionen, Füllstoffe, Pigmente und andere Zusätze, die dem Fachmann zur Herstellung von Beschichtungszusammensetzungen bekannt sind, können ebenfalls zugesetzt werden.

Die erfindungsgemäßen wässrigen Copolymerisatdispersionen sind besonders geeignet zur Verwendung in elastischen Fassadenfarben und Dachbeschichtungen, Dichtmassen und Dichtschlämmen, Bindemitteln für Lederfasern und in Klebstoffen. Die Zubereitungen zeichnen sich durch sehr gute Rückstellkraft nach Dehnung der Beschichtungen aus.

Die vorliegende Erfindung wird im folgenden anhand von Ausführungsbeispielen näher beschrieben, ohne jedoch dadurch beschränkt zu werden.

### Bestimmung der Reißdehnung und Zugspannung:

Filme der zu prüfenden Beschichtungen wurden mit einem 400 µm-Kastenrakel auf eine Polyethylenfolie aufgezogen und bei 23°C und 50% relativer Luftfeuchte 7 Tage gelagert. Dann wurden mit einer Stanze 6 Probekörper pro Beschichtung mit den Maßen 110mm*15 mm ausgelöst und die Dicke der Beschichtungsprüfkörper mit einem Schichtdickenmeßgerät Deltascope der Firma Fischer ermittelt und notiert. Sodann wurden die Filme in eine Zugprüfmaschine Typ 4302 der Firma Instron mit 100N-Kraftmeßdose und handelsüblicher PC-Steuerung eingespannt. Hierbei betrug die freie Filmlänge zwischen den Klemmbacken 60 mm. Dann wurde mit einer Zuggeschwindigkeit von 200mm/min bis zum Filmriß gedehnt. Das PC-Programm erfaßt die (Reiß)dehnung und die Zugspannung bis zum Filmriß, weiterhin das Young-Modul sowie die Bruchenergieaufnahme. Für die Ermittlung dieser Daten muß vor dem Versuch die Trockenfilmdicke im PC-Programm eingegeben werden.

### Bestimmung der Teilchengröße:

Die Partikelgröße der Polymerdispersionen wurde mittels Photonenkorrelationsspektroskopie bei einem Streuwinkel von 90° als Gewichtsmittel (d_{w}) ermittelt.

### Beispiel 1

### Herstellung einer wäßrigen Copolymerisatdispersion

500g n-Butylacrylat, 200g 2-Ethylhexylacrylat, 270g Styrol und 20g Methacrylsäure (Monomerenmischung) wurden in eine Lösung aus 64,4g Genapol® LRO mit einem Gehalt von 28 Gew. % Laurylalkoholdiglykolethersulfat-Natriumsalz als Aktivsubstanz in Wasser (von der Firma Clariant) und 954 g Wasser emulgiert und die Emulsion noch 10 Minuten bei 1000 Umdrehungen pro Minute (UpM) mit einem Dissolver geschert.

Davon wurden 202 g Monomeremulsion abgewogen und mit einer Lösung aus 0,5g Natriumperoxodisulfat in 10g Wasser versetzt. Sodann wurde diese Vorlage in einem Glasreaktor unter Rühren (120 UpM, Ankerrührer) auf 80°Caufgeheizt und nach 10 min. Warten die restliche Monomeremulsion binnen 2,5 h durch einen Tropftrichter zudosiert. Parallel zur Monomeremulsion wurde eine Lösung aus 4,3g Natriumperoxodisulfat und 90g Wasser zum Ansatz durch einen Tropftrichter zugegeben. Nach Zulaufende wurde noch 1 h bei 80°C nachgeheizt, sodann wurde beim Abkühlen der Ansatz bei ca. 70°C mit 12,5 Gew. %-igem Ammoniakwasser auf einen pH-Wert von 7 eingestellt. Abschließend wurden bei 25°C Innentemperatur 7g Irgacure 500 der Firma Ciba Specialty Chemicals in die Dispersion eingerührt. Man erhielt eine Copolymerisatdispersion mit einem Feststoffgehalt von ca. 48 Gew. %. Die Teilchengröße dw betrug 138 nm.

### Beispiel 2

Als Copolymerisatdispersion wurde eine UV-vernetzende Acrylatdispersion für Elastbeschichtungen mit einem Gehalt an ca. 55 Gew. % Mowilith® LDM 7900 der Firma Celanese Emulsions GmbH verwendet.

### Beispiel 3

### Herstellung der erfindungsgemäßen Cyclohexylepoxysilan haltigen wässrigen Copolymerisate

In die Copolymerisatdispersionen des Beispiels 1 und 2 wurde das Cyclohexylepoxysilan Coatosil® 1770 (OSi, entsprechend β-(3,4-Epoxycyclohexyl)-ethyltriethoxysilan)] mit einem mechanischen Rührer eingearbeitet und durch 10 min. Rühren in der Dispersion gleichmäßig verteilt.

**Tabelle 1:**

| Beispiel | Dispersion | Gewichts-% β-(3,4-Epoxycyclohexyl)ethyl triethoxysilan), bezogen auf die wässrige Dispersion |
|---|---|---|
| 3a (Vergleich) | Beispiel 1 | - |
| 3b | Beispiel 1 | 0,1 |
| 3c (Vergleich) | Beispiel 2 | - |
| 3d | Beispiel 2 | 0,1 |

### Beispiel 4

### Herstellung von elastischen Fassadenbeschichtungen

In 100 g Wasser wurden unter Rühren nacheinander 5 g einer 10 %-igen Lösung von Calgone N der Firma BK Ladenburg und 1,4 g Coatex® P 90 der Firma Dimed sowie 2 g Foammaster® 111 FA der Firma Cognis zugegeben. Dann wurden 80 g Titandioxid (Kronos® L 2310, der Firma Kronos Titan) und 380 g Calciumcarbonat (Durcal® 2, der Firma Omya) nacheinander zugegeben und mit einem Dissolver 15 Minuten bei 5000 UpM gerührt. Anschließend wurden 485 g (Beispiel 3a, b) bzw. 422 g (Beispiel 3c, d) Polymerdispersion bei 500 UpM sowie 1 g 25 %-iges Ammoniakwasser zugegeben und 5 Minuten gerührt. Schließlich gab man 2 g Mergal® K9 der Firma Troy, 2 g Butyldiglykol, 10 g Propylenglykol, 5 g Testbenzin (Siedebereich 135-180°C) und abschließend eine Lösung aus 7,5 g Coatex® BR 100 der Firma Dimed und 23,2 g Wasser hinzu. Anschließend wurde noch ca. 5 Minuten weitergerührt.

**Tabelle 2:**

| Beispiel | Dispersion | Additiv [Gew. %, bezogen auf die wässrige Dispersion] |
|---|---|---|
| 4a (Vergleich) | Beispiel 1 | - |
| 4b | Beispiel 1 | 0,1 |
| 4c (Vergleich) | Beispiel 2 | - |
| 4d | Beispiel 2 | 0,1 |

### Beispiel 5

### Bestimmung der Reißdehnung und Zugspannung von Beschichtungen

**Tabelle 3:**

| Beschichtung | Zugspannung beim Bruch [MPa] | Reißdehnung beim Bruch [%] | D Reißdehnung [%] | Bruchenergie [J] | D Bruchenergie [%] |
|---|---|---|---|---|---|
| 4a (Vergleich) | 1,02 | 360 | | 0,43 | |
| 4b | 1,04 | 524 | +45.6 | 0,79 | 83,7 |
| 4c (Vergleich) | 1,36 | 139 | | 0,22 | |
| 4d | 1,39 | 161 | +15.8 | 0,27 | 22,7 |

Wie ein Vergleich der Beispiele 4a mit 4b und 4c mit 4d zeigt, zeichnen sich die Beschichtungen 4b und 4d, die auf den erfindungsgemäßen Cyclohexylepoxisilan haltigen Copolymerisaten basieren, durch eine erhöhte Zugspannung und damit erhöhte Rückstellkraft nach der Dehnung der Beschichtung aus.

## Patentansprüche

1. Wässrige Copolymerisatdispersion erhältlich durch radikalische Polymerisation zumindest der Monomeren a) und b) und durch nachträgliche Zugabe von mindestens einem Cycloalkylepoxysilan zu der erhaltenen Copolymerisatemulsion, wobei Monomer a) ein Ester aus 3 bis 6 C-Atome enthaltenden α,β-monoethylenisch ungesättigten Carbonsäuren sowie 1 bis 18 C-Atome enthaltenden Alkanolen und gegebenenfalls eine vinylaromatische Verbindung ist oder ein Gemisch dieser Monomeren bedeutet und wobei Monomer b) eine ein- oder mehrbasische α,β-monoethylenisch ungesättigte Säure und/oder deren Anhydrid bedeutet.

2. Wässrige Copolymerisatdispersion nach Anspruch 1, **dadurch gekennzeichnet, dass** zusätzlich zu den Monomeren a) und b) sich noch mindestens eines der Monomeren c), d), e) und/oder f) eingesetzt werden, wobei Monomer c) ein di-oder oligoethylenisch ungesättigtes vernetzendes Monomer oder ein Gemisch dieser Monomeren bedeutet, Monomer d) ein 3 bis 8 C-Atome enthaltendes α,β-monoethylenisch ungesättigtes Carbonsäureamid oder ein Gemisch dieser Monomeren bedeutet, Monomer e) ein Reaktivvernetzermonomer, ausgewählt aus einer Kombination mindestens eines ethylenisch ungesättigten Silans mit mindestens einem ethylenisch ungesättigten Monomeren mit einer Oxirangruppe oder einem Gemisch dieser Monomeren bedeutet und Monomer f) ein sonstiges copolymerisierbares ethylenisch ungesättigtes Monomer oder ein Gemisch dieser Monomeren, ausgenommen ein stickstoffhaltiges, mit Epoxygruppen reagierendes Monomer, bedeutet.

3. Wässrige Copolymerisatdispersion nach Anspruch 1, **dadurch gekennzeichnet, dass** diese einen Feststoffanteil von 20 - 65 Gew. % aufweist und dass das Copolymerisat sich ableitet von 40 bis 99,8 Gew. % an Monomer a) oder deren Gemischen, von 0,1 bis 10 Gew. % an Monomer b) oder deren Gemischen, von 0 bis 10 Gew. % an Monomer c) oder deren Gemischen, von 0 bis 5 Gew. % an Monomer d) oder deren Gemischen, von 0 bis 5 Gew. % an Monomer e) oder deren Gemischen, und von 0 bis 30 Gew. % an Monomer f) oder deren Gemischen, wobei die Mengenangaben an Monomer auf die Gesamtmenge an eingesetztem Monomer bezogen sind.

4. Wässrige Copolymerisatdispersion nach Anspruch 1, **dadurch gekennzeichnet, dass** die Gewichtsanteile der Monomeren a) und b) innerhalb der beschriebenen Grenzen so gewählt werden, dass ein nur aus diesen Monomeren aufgebautes Copolymerisat eine Glasübergangstemperatur im Bereich zwischen -50 bis 120°C aufweisen würde.

5. Wässrige Copolymerisatdispersion nach Anspruch 1, **dadurch gekennzeichnet, dass** das Cycloalkylepoxysilan eine Verbindung der allgemeinen Formel (I) ist 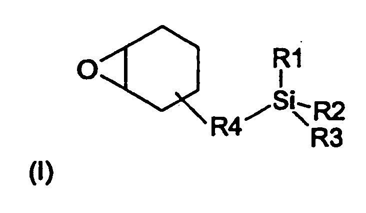 wobei R¹, R² und R³ lineare oder verzweigte Alkoxyreste mit Bindung des Sauerstoffatoms zum Siliciumatom und/oder Alkylreste mit 1-10 CAtomen bedeuten und R⁴ ein linearer oder verzweigter Alkylenrest mit 1-10 C-Atomen darstellt.

6. Wässrige Copolymerisatdispersionen nach Anspruch 1, **dadurch gekennzeichnet, dass** diese ein oder mehrere UV-Initiatoren B) und/oder ein oder mehrere Emulgatoren C), und/oder ein oder mehrere wasserlösliche Copolymerisate D) enthalten.

7. Wässrige Copolymerisatdispersionen nach Anspruch 1, **dadurch gekennzeichnet, dass** diese einen Feststoffanteil von 20 - 65 Gew. % aufweisen und die **dadurch** erhältlich sind, dass ein Copolymerisat A) im wesentlichen bestehend aus
a) 40 bis 99,8 Gew. %, mindestens eines Esters aus 3 bis 6 C-Atome enthaltenden α,β-monoethylenisch ungesättigten Carbonsäuren sowie 1 bis 18 C-Atome enthaltenden Alkanolen und 0 bis 30 Gew. % mindestens einer vinylaromatischen Verbindung (Monomere a),
b) 0,1 bis 10 Gew. % mindestens einer ein- oder mehrbasischen (α,β-monoethylenisch ungesättigten Säure oder deren Anhydriden (Monomere b),
c) 0 bis 10 Gew. % mindestens eines di- oder oligoethylenisch ungesättigten vernetzenden Monomeren (Monomere c),
d) 0 bis 5 Gew. % wenigstens eines 3 bis 8 C-Atome enthaltenden (α,β-monoethylenisch ungesättigten Carbonsäureamids, welches am Stickstoff einfach oder doppelt mit bis zu 5 C-Atomen enthaltenden Alkylgruppen, Alkylsulfaten, Alkylsulfonaten, Alkylphosphaten, Alkylethern oder Alkylethersulfaten oder -phosphaten substituiert sein kann (Monomere d),
e) 0 bis 5 Gew. % Reaktiwernetzermonomere, ausgewählt aus einer Kombination mindestens eines ethylenisch ungesättigten Silans mit mindestens einem ethylenisch ungesättigten Monomeren mit einer Oxirangruppe (Monomere e),
f) 0 bis 30 Gew. % mindestens eines sonstigen copolymerisierbaren ethylenisch ungesättigten Monomeren (Monomere f), ausgenommen stickstoffhaltige, mit Epoxygruppen reagierende Monomere,
wobei sich die Gewichtsanteile auf das Gesamtgewicht an Monomeren beziehen und die Gewichtsanteile der Monomeren a) und b) innerhalb der beschriebenen Grenzen so gewählt werden, dass ein nur aus diesen Monomeren aufgebautes Copolymerisat eine Glasübergangstemperatur im Bereich zwischen -50 und 15 °C aufweisen würde;
durch Polymerisation der Monomeren a) bis f) in Wasser hergestellt wird und zu der so erhaltenen wässrigen Copolymerisatdispersion nachträglich ein oder mehrere funktionelle Cyclohexylepoxysilane der allgemeinen Formel (I) 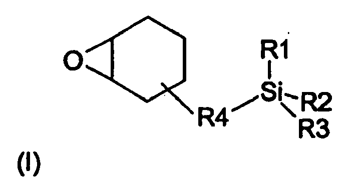 wobei R¹, R² und R³ lineare oder verzweigte Alkoxyreste mit Bindung des Sauerstoffatoms zum Siliciumatom und/oder Alkylreste mit 1-10 CAtomen bedeuten und R⁴ ein linearer oder verzweigter Alkylenrest mit 1-10 C-Atomen darstellt, bei Temperaturen zwischen 25 und 90°C zugegeben werden;
und gegebenenfalls ein oder mehrere UV-Initiatoren B) in einer Menge von 0 bis 5 Gew. %, bezogen auf das Copolymerisat A;
gegebenenfalls ein oder mehrere Emulgatoren C) in einer Menge von 0 bis 10 Gew. %, bezogen auf das Copolymerisat A; und
gegebenenfalls ein oder mehrere wasserlösliche Copolymerisate D) in einer Menge von 0 bis 4 Gew. %, bezogen auf das Copolymerisat A,
nachträglich zu der wässrigen Copolymerisatdispersion zugegeben werden.

8. Wässrige Copolymerisatdispersionen gemäß Anspruch 7, **dadurch gekennzeichnet, dass** das Cyclohexylepoxisilan der allgemeinen Formel (I) in einer Menge von bis zu 1 Gew.-%, bezogen auf die wässrige Dispersion des Copolymerisats A), zugesetzt wird.

9. Wässrige Copolymerisatdispersionen gemäß Anspruch 7, **dadurch gekennzeichnet, dass** die Reste R¹, R² und R³ in der allgemeinen Formel (I) jeweils unabhängig voneinander -OCH₃ oder -OC₂H₅ und der Rest R⁴ -C₂H₄- bedeuten.

10. Wässrige Copolymerisatdispersionen gemäß Anspruch 7, **dadurch gekennzeichnet, dass** als Ester von 3 bis 6 C-Atome enthaltenden α,β-monoethylenisch ungesättigten Carbonsäuren und 1 bis 18 C-Atome enthaltenden Alkanolen Ester der Acryl- und/oder Methacrylsäure eingesetzt werden.

11. Wässrige Copolymerisatdispersionen gemäß Anspruch 7, **dadurch gekennzeichnet, dass** als vinylaromatische Verbindung Styrol eingesetzt wird.

12. Wässrige Copolymerisatdispersionen gemäß Anspruch 7, **dadurch gekennzeichnet, dass** als α, β-monoethylenisch ungesättigtes Carbonsäureamid Methacrylamid eingesetzt wird.

13. Wässrige Copolymerisatdispersionen gemäß Anspruch 7, **dadurch gekennzeichnet, dass** als Monomere e) Silane der allgemeinen Formel CH₂=CH-Si(OX)₃ eingesetzt werden, wobei X für Wasserstoff, eine Acylgruppe oder eine Alkylgruppe mit maximal zehn C-Atomen steht.

14. Wässrige Copolymerisatdispersionen gemäß Anspruch 7, **dadurch gekennzeichnet, dass** als Monomere e) Silane der allgemeinen Formel CH₂=CZ-COO-Y-Si(OX)₃ eingesetzt werden, wobei Z für Wasserstoff, eine Methyl- oder Ethylgruppe, Y für eine lineare oder verzweigte Alkylenkette mit 2 bis 6 C-Atomen und X für Wasserstoff, eine Acylgruppe oder eine Alkygruppe mit maximal zehn C-Atomen 10 steht.

15. Wässrige Copolymerisatdispersionen gemäß Anspruch 7, **dadurch gekennzeichnet, dass** als Monomere e) Glycidylmethacrylat und/oder Glycidylacrylat eingesetzt werden.

16. Wässrige Copolymerisatdispersionen gemäß Anspruch 7, **dadurch gekennzeichnet, dass** als Komponente B Benzophenon, Acetophenon, 1-Hydroxycyclohexylphenylketon, 4-Methylbenzophenon und 2, 4, 6-Trimethylbenzophenon eingesetzt wird.

17. Wässrige Copolymerisatdispersionen gemäß Anspruch 7, **dadurch gekennzeichnet, dass** als Komponente C nichtionische und/oder ionische Emulgatoren eingesetzt werden.

18. Wässrige Copolymerisatdispersionen gemäß Anspruch 7, **dadurch gekennzeichnet, dass** als wasserlösliches Copolymerisat D) Styrol-Maleinsäureanhydrid-Copolymerisate mit einem Molekulargewicht von 1000 bis 4000 g/mol eingesetzt werden.

19. Verfahren zur Herstellung einer wässrigen Copolymerisatdispersion gemäß Anspruch 1, **dadurch kennzeichnet dass** die Monomere a) und b) und gegebenenfalls c), d), e) und/oder f) nach Anspruch 2 in wässrigem Medium in Gegenwart von wasserlöslichen radikalbildenden Initiatoren, Emulgatoren und/oder Schutzkolloiden, Reglern und/oder weiteren Hilfsmitteln durch Emulsionspolymerisation radikalisch polymerisiert werden, und die so erhaltene wässrige Copolymerisatdispersion nachträglich mit einem oder mehreren Cycloalkylepoxysilanen, bei Temperaturen zwischen 25 und 90°C versetzt wird und gegebenenfalls mit einem oder mehreren UV-Initiatoren B), gegebenenfalls mit einem oder mehreren Emulgatoren C), und gegebenenfalls mit einem oder mehreren wasserlöslichen Copolymerisaten D) nachträglich versetzt wird.

20. Verfahren zur Herstellung einer wässrigen Copolymerisatdispersion gemäß Anspruch 19, **dadurch kennzeichnet, dass** als Cycloalkylepoxysilan eine Verbindung der allgemeinen Formel (I) eingesetzt wird 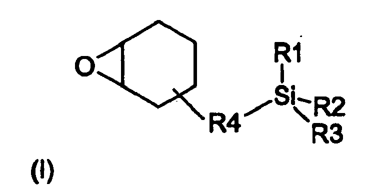 wobei R¹, R² und R³ lineare oder verzweigte Alkoxyreste mit Bindung des Sauerstoffatoms zum Siliciumatom und/oder Alkylreste mit 1-10 C-Atomen bedeuten und R⁴ ein linearer oder verzweigter Alkylenrest mit 1-10 C-Atomen darstellt.

21. Verwendung der wässrigen Copolymerisatdispersion nach Anspruch 1 zur Herstellung von Beschichtungen.

22. Verwendung nach Anspruch 21 für elastische Fassadenfarben und elastische Dachbeschichtungen.

23. Verwendung der wässrigen Copolymerisatdispersion nach Anspruch 1 für Dichtschlämme.

24. Verwendung der wässrigen Copolymerisatdispersion nach Anspruch 1 als Lederfaserbindemittel.

25. Verwendung der wässrigen Copolymerisatdispersion nach Anspruch 1 für Klebstoffe.

26. Beschichtungsmittel enthaltend eine wässrige Copolymerisatdispersion nach Anspruch 1 und im wesentlichen
a) Pigmente,
b) Füllstoffe,
c) Dispergiermittel
d) Netzmittel
e) UV-Filterstoffe
a) Flammschutzmittel
b) Verdicker
c) Weichmacher
d) Entschäumer.

## Claims

1. An aqueous copolymer dispersion obtainable by free-radical polymerization at least of monomers a) and b) and by subsequent addition of at least one cycloalkylepoxysilane to the resulting copolymer emulsion, monomer a) being an ester of α,β-monoethylenically unsaturated carboxylic acids containing 3 to 6 carbon atoms and alkanols containing 1 to 18 carbon atoms and, if desired, a vinylaromatic compound, or a mixture of these monomers, and monomer b) being a monobasic or polybasic α,β-monoethylenically unsaturated acid and/or anhydride thereof.

2. The aqueous copolymer dispersion as claimed in claim 1, wherein in addition to monomers a) and b) use is also made of at least one of the monomers c), d), e) and/or f), monomer c) being a diethylenically or oligoethylenically unsaturated crosslinking monomer or a mixture of these monomers, monomer d) being an α,β-monoethylenically unsaturated carboxamide containing 3 to 8 carbon atoms, or a mixture of these monomers, monomer e) being a reactive crosslinker monomer selected from a combination of at least one ethylenically unsaturated silane with at least one ethylenically unsaturated monomer containing an oxirane group, or a mixture of these monomers, and monomer f) being another kind of copolymerizable ethylenically unsaturated monomer or a mixture of these monomers, with the exception of a nitrogen-containing monomer which is reactive with epoxy groups.

3. The aqueous copolymer dispersion as claimed in claim 1, which has a solids content of 20 - 65% by weight, and wherein the copolymer is derived from 40 to 99.8% by weight of monomer a) or mixtures thereof, from 0.1 to 10% by weight of monomer b) or mixtures thereof, from 0 to 10% by weight of monomer c) or mixtures thereof, from 0 to 5% by weight of monomer d) or mixtures thereof, from 0 to 5% by weight of monomer e) or mixtures thereof, and from 0 to 30% by weight of monomer f) or mixtures thereof, the amounts of monomer being based on the total amount of monomer employed.

4. The aqueous copolymer dispersion as claimed in claim 1, wherein within the limits described the weight fractions of the monomers a) and b) are chosen such that a copolymer synthesized only from these monomers would have a glass transition temperature in the range between -50 to 120°C.

5. The aqueous copolymer dispersion as claimed in claim 1, wherein the cycloalkylepoxysilane is a compound of the general formula (I) 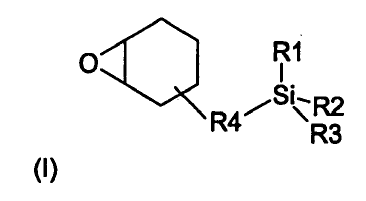 where R¹, R², and R³ are linear or branched alkoxy radicals with the oxygen atom bonding to the silicon atom and/or are alkyl radicals having 1-10 carbon atoms and R⁴ is a linear or branched alkylene radical having1-10 carbon atoms.

6. The aqueous copolymer dispersion as claimed in claim 1, comprising one or more UV initiators B) and/or one or more emulsifiers C), and/or one or more water-soluble copolymers D).

7. The aqueous copolymer dispersion as claimed in claim 1, which has a solids content of 20 - 65% by weight and is obtainable by preparing a copolymer A) consisting essentially of
a) from 40 to 99.8% by weight, of at least one ester of α,β-monoethylenically unsaturated carboxylic acids containing from 3 to 6 carbon atoms and alkanols containing 1 to 18 carbon atoms, and from 0 to 30% by weight of at least one vinylaromatic compound (monomers a),
b) from 0.1 to 10% by weight of at least one monobasic or polybasic α,β-monoethylenically unsaturated acid or anhydrides thereof (monomers b),
c) from 0 to 10% by weight of at least one diethylenically or oligoethylenically unsaturated crosslinking monomer (monomers c),
d) from 0 to 5% by weight of at least one α,β-monoethylenically unsaturated carboxamide which contains 3 to 8 carbon atoms and may be substituted once or twice on the nitrogen by alkylene groups containing up to 5 carbon atoms, alkyl sulfates, alkylsulfonates, alkyl phosphates, alkyl ethers or alkyl ether sulfates or alkyl ether phosphates (monomers d),
e) from 0 to 5% by weight of reactive crosslinker monomers selected from a combination of at least one ethylenically unsaturated silane with at least one ethylenically unsaturated monomer containing an oxirane group (monomers e),
f) from 0 to 30% by weight of at least one other kind of copolymerizable ethylenically unsaturated monomer (monomers f), with the exception of nitrogen-containing monomers which are reactive with epoxy groups,
the weight fractions being based on the total weight of monomers, and the weight fractions of the monomers a) and b) being chosen within the limits described such that a copolymer synthesized only from these monomers would have a glass transition temperature in the range between -50 and 15°C;
by polymerizing the monomers a) to f) in water, and subsequently adding to the resultant aqueous copolymer dispersion one or more functional cyclohexylepoxysilanes of the general formula (I) 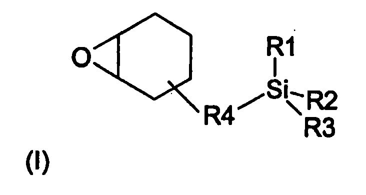 where R¹, R², and R³ are linear or branched alkoxy radicals with the oxygen atom bonding to the silicon atom and/or are alkyl radicals having 1-10 carbon atoms and R⁴ is a linear or branched alkylene radical having 1-10 carbon atoms, at temperatures between 25 and 90°C;
and subsequently adding, if desired, one or more UV initiators B) in an amount of from 0 to 5% by weight, based on the copolymer A);
if desired, one or more emulsifiers C), in an amount of from 0 to 10% by weight, based on the copolymer A); and
if desired, one or more water-soluble copolymers D), in an amount of from 0 to 4% by weight, based on the copolymer A),
to the aqueous copolymer dispersion.

8. The aqueous copolymer dispersion as claimed in claim 7, wherein the cyclohexylepoxysilane of the general formula (I) is added in an amount of up to 1 % by weight, based on the aqueous dispersion of the copolymer A).

9. The aqueous copolymer dispersion as claimed in claim 7, wherein the radicals R¹, R², and R³ in the general formula (I) in each case independently of one another are -OCH₃ or -OC₂H₅ and the radical R⁴ is -C₂H₄-.

10. The aqueous copolymer dispersion as claimed in claim 7, wherein as esters of α,β-monoethylenically unsaturated carboxylic acids containing 3 to 6 carbon atoms and alkanols containing 1 to 18 carbon atoms esters of acrylic acid and/or methacrylic acid are used.

11. The aqueous copolymer dispersion as claimed in claim 7, wherein as vinylaromatic compound styrene is used.

12. The aqueous copolymer dispersion as claimed in claim 7, wherein as α,β-monoethylenically unsaturated carboxamide methacrylamide is used.

13. The aqueous copolymer dispersion as claimed in claim 7, wherein as monomers e) silanes of the general formula CH₂=CH-Si(OX)₃ are used where X is hydrogen, an acyl group or an alkyl group having not more than ten carbon atoms.

14. The aqueous copolymer dispersion as claimed in claim 7, wherein as monomers e) silanes of the general formula CH₂=CZ-COO-Y-Si(OX)₃ are used where Z is hydrogen or a methyl or ethyl group, Y is a linear or branched alkylene chain having 2 to 6 carbon atoms, and X is hydrogen, an acyl group or an alkyl group having not more than ten carbon atoms.

15. The aqueous copolymer dispersion as claimed in claim 7, wherein as monomers e) glycidyl methacrylate and/or glycidyl acrylate are used.

16. The aqueous copolymer dispersion as claimed in claim 7, wherein as component B) benzophenone, acetophenone, 1-hydroxycyclohexyl phenyl ketone, 4-methylbenzophenone and 2,4,6-trimethylbenzophenone are used.

17. The aqueous copolymer dispersion as claimed in claim 7, wherein as component C) nonionic and/or ionic emulsifiers are used.

18. The aqueous copolymer dispersion as claimed in claim 7, wherein as water-soluble copolymer D) styrene-maleic anhydride copolymers having a molecular weight of from 1000 to 4000 g/mol are used.

19. A process for preparing an aqueous copolymer dispersion as claimed in claim 1, which comprises subjecting the monomers a) and b) and, where appropriate, c), d), e) and/or f) as set forth in claim 2 to free-radical polymerization in aqueous medium in the presence of water-soluble radical-forming initiators, emulsifiers and/or protective colloids, regulators and/or further auxiliaries, by emulsion polymerization, and subsequently adding to the resulting aqueous copolymer dispersion one or more cycloalkylepoxysilanes, at temperatures between 25 and 90°C, and subsequently adding, if desired, one or more UV initiators B), if desired, one or more emulsifiers C), and, if desired, one or more water-soluble copolymers D).

20. A process for preparing an aqueous copolymer dispersion as claimed in claim 19, wherein a compound of the formula (I) is used as cycloalkylepoxysilane 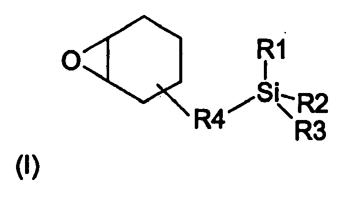 where R¹, R², and R³ are linear or branched alkoxy radicals with the oxygen atom bonding to the silicon atom and/or are alkyl radicals having 1-10 carbon atoms and R⁴ is a linear or branched alkylene radical having 1-10 carbon atoms.

21. The use of the aqueous copolymer dispersion as claimed in claim 1 for producing coatings.

22. The use as claimed in claim 21 for elastic masonry paints and elastic roof coatings.

23. The use of the aqueous copolymer dispersion as claimed in claim 1 for grouts.

24. The use of the aqueous copolymer dispersion as claimed in claim 1 as a leather fiber binder.

25. The use of the aqueous copolymer dispersion as claimed in claim 1 for adhesives.

26. A coating material comprising an aqueous copolymer dispersion as claimed in claim 1 and substantially
a) pigments,
b) fillers,
c) dispersants,
d) wetting agents,
e) UV filter substances,
f) flame retardants,
g) thickeners,
h) plasticizers, and
i) defoamers.

## Revendications

1. Dispersion aqueuse de copolymère pouvant être obtenue par polymérisation radicalaire d'au moins les monomères a) et b) et par ajout postérieur d'au moins un cycloalkylépoxysilane à l'émulsion de copolymère obtenue, dans laquelle le monomère a) est un ester d'acides carboxyliques α,β-monoéthyléniquement insaturés contenant 3 à 6 atomes de carbone avec des alcanols contenant 1 à 18 atomes de carbone et éventuellement un composé aromatique de vinyle ou représente un mélange de ces monomères et dans laquelle le monomère b) représente un acide mono- ou polyfonctionnel α,β-mono-éthyléniquement insaturé et/ou son anhydride.

2. Dispersion aqueuse de copolymère selon la revendication 1, **caractérisée en ce qu'**on ajoute en plus aux monomères a) et b) encore au moins l'un des monomères c), d), e) et/ou f), dans laquelle le monomère c) représente un monomère réticulant di- ou oligoéthyléniquement insaturé ou un mélange de ces monomères, le monomère d) représente un carboxamide α,β-monoéthyléniquement insaturé contenant 3 à 8 atomes de carbone ou un mélange de ces monomères, le monomère e) représente un monomère à agent de réticulation réactif, choisi dans une combinaison d'au moins un silane éthyléniquement insaturé avec au moins un monomère éthyléniquement insaturé avec un groupe oxirane ou un mélange de ces monomères et le monomère f) représente un autre monomère copolymérisable éthyléniquement insaturé ou un mélange de ces monomères, à l'exception d'un monomère azoté, réagissant avec des groupes époxy.

3. Dispersion aqueuse de copolymère selon la revendication 1, **caractérisée en ce que** celle-ci présente une teneur en matières solides de 20 à 65 % en poids et **en ce que** le copolymère dérive de 40 à 99,8 % en poids d'un monomère a) ou de mélanges de ceux-ci, de 0,1 à 10 % en poids de monomère b) ou de mélanges de ceux-ci, de 0 à 10 % en poids de monomère c) ou de mélanges de ceux-ci, de 0 à 5 % en poids de monomère d) ou de mélanges de ceux-ci, de 0 à 5 % en poids de monomère e) ou de mélanges de ceux-ci, et de 0 à 30 % en poids de monomère f) ou de mélanges de ceux-ci, les indications de quantités étant rapportées à la quantité totale de monomère mis en oeuvre.

4. Dispersion aqueuse de copolymère selon la revendication 1, **caractérisée en ce que** les proportions en poids des monomères a) et b) sont choisies à l'intérieur des limites décrites de sorte qu'un copolymère construit à partir de ces monomères présente une température de transition vitreuse entre -50 et 120 C.

5. Dispersion aqueuse de copolymère selon la revendication 1, **caractérisée en ce que** le cycloalkylépoxysilane soit un composé de formule générale (I) 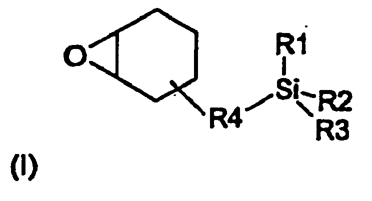 dans laquelle R¹, R² et R³ représentent des radicaux alcoxy linéaires ou ramifiés avec liaison de l'atome d'oxygène à l'atome de silicium et/ou des radicaux alkyle avec 1 à 10 atomes de carbone et R⁴ représente un radical alkylène linéaire ou ramifié avec 1 à 10 atomes de carbone.

6. Dispersions aqueuses de copolymère selon la revendication 1, **caractérisées en ce que** celles-ci contiennent un ou plusieurs amorceurs UV B) et/ou un ou plusieurs émulsifiants C), et/ou un ou plusieurs copolymères D).

7. Dispersions aqueuses selon la revendication 1, **caractérisées en ce que** celles-ci présentent une teneur en matières solides de 20 à 65 % en poids et qu'on peut les obtenir en fabriquant un copolymère A) constitué essentiellement de
a) 40 à 99,8 % en poids d'au moins un ester d'acides carboxyliques α,β-monoéthyléniquement insaturés contenant 3 à 6 atomes de carbone avec des alcanols contenant 1 à 18 atomes de carbone et 0 à 30 % en poids d'au moins un composé aromatique de vinyle (monomère a),
b) 0,1 à 10 % en poids d'au moins un acide mono ou polyfonctionnel α,β-monoéthyléniquement insaturé ou son anhydride (monomère b),
c) 0 à 10 % en poids d'au moins un monomère réticulant di- ou oligoéthyléniquement insaturé (monomère c),
d) 0 à 5 % en poids d'au moins un carboxamide α,β-monoéthyléniquement insaturé contenant 3 à 8 atomes de carbone, qui peut être substitué une ou deux fois sur l'azote avec des groupes alkyle, des sulfates d'alkyle, sulfonates d'alkyle, phosphates d'alkyle, alkyléthers ou éthersulfates ou -phosphates d'alkyle contenant jusqu'à 5 atomes de carbone (monomère d),
e) 0 à 5 % en poids de monomère à agent de réticulation réactif, choisi dans une combinaison d'au moins un silane éthyléniquement insaturé avec au moins un monomère éthyléniquement insaturé avec un groupe oxirane (monomère e),
f) 0 à 30 % en poids d'au moins un autre monomère copolymérisable éthyléniquement insaturé (monomère f), à l'exclusion des monomères azotés, réagissant avec les groupes époxy,
dans lesquelles les proportions en poids se rapportent au poids total de monomères et les proportions en poids des monomères a) et b) sont choisies à l'intérieur des limites décrites de sorte qu'un copolymère construit seulement à partir de ces monomères présente une température de transition vitreuse dans la gamme entre -50 et 15°C;
par polymérisation des monomères a) à f) dans l'eau et en ajoutant ensuite à la dispersion aqueuse de copolymère ainsi obtenue un ou plusieurs cyclohexyl-époxysilanes fonctionnels de formule générale (I) 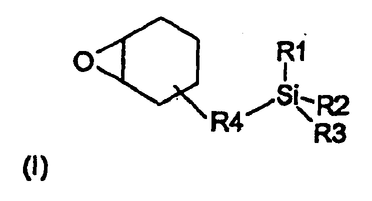 dans laquelle R¹, R² et R³ représentent des radicaux alcoxy linéaires ou ramifiés avec liaison de l'atome d'oxygène à l'atome de silicium et/ou des radicaux alkyle avec 1 à 10 atomes de carbone et R⁴ représente un radical alkylène linéaire ou ramifié avec 1 à 10 atomes de carbone, à des températures entre 25 et 90 °C ;
et éventuellement un ou plusieurs amorceurs UV B) en une quantité de 0 à 5 % en poids, par rapport au copolymère A ;
éventuellement un ou plusieurs émulsifiants C) en une quantité de 0 à 10 % en poids, par rapport au copolymère A) ; et
éventuellement un ou plusieurs copolymères hydrosolubles D) en une quantité de 0 à 4 % en poids, par rapport au copolymère A,
postérieurement à la dispersion aqueuse de copolymère.

8. Dispersions aqueuses de copolymères selon la revendication 7, **caractérisées en ce que** l'on ajoute le cyclohexylépoxysilane de formule générale (I) en une quantité jusqu'à 1 % en poids par rapport à la dispersion aqueuse du copolymère A).

9. Dispersions aqueuses de copolymère selon la revendication 7, **caractérisées en ce que** les radicaux R¹, R² et R³ dans la formule générale (I) représentent respectivement indépendamment les uns des autres -OCH₃ ou -OC₂H₅ et le radical R⁴ représente -C₂H₄-.

10. Dispersions aqueuses de copolymères selon la revendication 7, **caractérisées en ce que** l'on utilise comme ester d'acides carboxyliques α,β-mono-éthyléniquement insaturés contenant 3 à 6 atomes de carbone avec des alcanols contenant de 1 à 18 atomes de carbone des esters de l'acide acrylique et/ou méthacrylique.

11. Dispersions aqueuses de copolymères selon la revendication 7, **caractérisées en ce que** l'on utilise comme composé aromatique de vinyle le styrène.

12. Dispersions aqueuses de copolymères selon la revendication 7, **caractérisées en ce que** l'on utilise comme carboxamide α,β-mono-éthyléniquement insaturé le méthacrylamide.

13. Dispersions aqueuses de copolymères selon la revendication 7, **caractérisées en ce que** l'on utilise comme monomère e) des silanes de formule générale CH₂=CH-Si(OX)₃, dans laquelle X représente un hydrogène, un groupe acyle ou un groupe alkyle avec 10 atomes de carbone au maximum.

14. Dispersions aqueuses de copolymères selon la revendication 7, **caractérisées en ce que** l'on utilise comme monomère e) des silanes de formule générale CH₂=CZ-COO-Y-Si(OX)₃, dans laquelle Z représente un hydrogène, un groupe méthyle ou éthyle, Y représente une chaîne alkylène linéaire ou ramifiée avec 2 à 6 atomes de carbone et X représente un hydrogène, un groupe acyle ou un groupe alkyle avec au maximum dix atomes de carbone.

15. Dispersions aqueuses de copolymères selon la revendication 7, **caractérisées en ce que** l'on utilise comme monomère e) le méthacrylate de glycidyle et/ou l'acrylate de glycidyle.

16. Dispersions aqueuses de copolymères selon la revendication 7, **caractérisées en ce que** l'on utilise comme composant B la benzophénone, l'acétophénone, la 1-hydroxycyclohexylphénylcétone, la 4-méthyl-benzophénone et la 2,4,6-triméthylbenzophénone.

17. Dispersions aqueuses de copolymères selon la revendication 7, **caractérisées en ce que** l'on utilise comme composant C des émulsifiants non ioniques et/ou ioniques.

18. Dispersions aqueuses de copolymères selon la revendication 7, **caractérisées en ce que** l'on utilise comme copolymère hydrosoluble D) le copolymère styrène-anhydride d'acide maléique avec une masse moléculaire de 1 000 à 4 000 g/l.

19. Procédé de préparation d'une dispersion aqueuse de copolymère selon la revendication 1, **caractérisé en ce que** l'on polymérise par voie radicalaire et polymérisation en émulsion les monomères a) et b) et éventuellement c), d), e) et/ou f) selon la revendication 2 en milieu aqueux en présence d'amorceurs radicalaires, d'émulsifiants et/ou de colloïdes protecteurs par polymérisation en émulsion, et on ajoute à la dispersion aqueuse de polymère ainsi obtenue ensuite un ou plusieurs cyclo-alkylépoxysilanes, à des températures entre 25 et 90 °C et on ajoute éventuellement ensuite un ou plusieurs amorceurs UV B), éventuellement un ou plusieurs émulsifiants C) et éventuellement un ou plusieurs copolymères hydrosolubles D).

20. Procédé de préparation d'une dispersion aqueuse de copolymère selon la revendication 19, **caractérisé en ce que** l'on utilise comme cycloalkylépoxysilane un composé de formule générale (I) 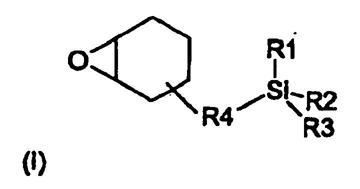 dans laquelle R¹, R² et R³ représentent des radicaux alcoxy linéaires ou ramifiés avec liaison de l'atome d'oxygène à l'atome de silicium et/ou des radicaux alkyle avec 1 à 10 atomes de carbone.

21. Utilisation de la dispersion aqueuse de copolymère selon la revendication 1 pour la préparation de revêtements.

22. Utilisation selon la revendication 21 pour la teinture élastique de façades et les revêtements élastique de toits.

23. Utilisation de la dispersion aqueuse de copolymère selon la revendication 1 pour des coulis de ciment.

24. Utilisation de la dispersion aqueuse de copolymère selon la revendication 1 comme liant de fibres de cuir.

25. Utilisation de la dispersion aqueuse de copolymère selon la revendication 1 pour des colles.

26. Matériau de revêtement contenant une dispersion aqueuse de copolymère selon la revendication 1 et essentiellement
a) des pigments,
b) des charges,
c) des dispersants,
d) des agents mouillants,
e) des filtres anti-UV,
f) des agents ignifuges
g) des agents épaississants,
h) des plastifiants,
i) des antimousses.
